# EUROPÄISCHE PATENTSCHRIFT

(11) **EP 1 880 592 B1**
(45) Veröffentlichungstag und Bekanntmachung des Hinweises auf die Patenterteilung: **23.12.2009**
(21) Anmeldenummer: 07014150.2
(22) Anmeldetag: 19.07.2007
(51) Int. Cl.: A01D 17/10

(54) **Vorrichtung zum Trennen landwirtschaftlicher Produkte von Beimengungen**
Device for separating impurities from agricultural products
Dispositif destiné à séparer des produits agricoles des impuretés

(30) Priorität: 22.07.2006 DE 102006033949
(43) Veröffentlichungstag der Anmeldung: 23.01.2008
(73) Patentinhaber: Grimme Landmaschinenfabrik GmbH & Co. KG, 49401 Damme (DE)
(72) Erfinder: Kalverkamp, Klemens, 49401 Damme (DE)
(74) Vertreter: Weeg, Thomas

(56) Entgegenhaltungen:
- EP-A1- 0 059 950
- EP-A1- 0 327 520
- GB-A- 855 820
- US-A- 4 416 650

## Beschreibung

Die Erfindung betrifft eine Vorrichtung zum Trennen landwirtschaftlicher Produkte von Beimengungen, insbesondere von Kartoffeln aus einem Kluten, Steine u. dgl. enthaltenden Gemisch, gemäß dem Oberbegriff des Anspruchs 1.

Bekannte Vorrichtungen dieser Art werden insbesondere bei Kartoffelerntemaschinen (DE 199 47 484 A1) eingesetzt, wobei eine Aufnahmevorrichtung vorgesehen ist, die ein das Gemisch auf Siebelementen aufnehmendes Siebband aufweist. Dieses Siebband ist mittels eines mit einer Antriebswelle verbindbaren und im Bereich seiner Umfangskontur die Antriebsverbindung zum Siebband bildenden Antriebsrades drehbar, so daß ein das Gemisch aufnehmender Trum des Siebbandes in einer Trennebene verlagerbar ist. Das im wesentlichen einstückige Antriebsrad ist dabei mit einem Zahnkranz versehen, so daß dieser hochbelastete Teilbereich hohem Verschleiß unterliegt und damit ein häufiger Wechsel des Antriebsrades bei nachteiligem Reparaturaufwand hohe Kosten verursacht. Gemäß US 2,749,157 ist eine Riemenscheibe für ein Förderband vorgesehen, das auf dem Außenumfang einer zylindrischen Trommel aufliegt und durch eine Reibverbindung mitnehmbar ist. Diese Reibverbindung ist schon prinzipiell nicht für die Anwendung in einer Trennvorrichtung für landwirtschaftliche Produkte geeignet, da derartige Reib-Förderbänder bei rauher Feldarbeit mit hoher Feuchtigkeit und Schmutz störanfällig sind; diese Nachteile weist auch eine zylindrische Umlenktrommel gemäß DE 11 58 443 B auf.

Auch in EP 0 059 950 A1 wird eine Antriebs- und Umlenktrommel vorgeschlagen, die mit einem Gummi-Mantel als Verschleißteil versehen ist. Neben einem hohen Aufwand zur Festlegung das Gummi-Mantels sind an der Trommel randseitige Verbindungs- und Stützteile erforderlich, die ihrerseits bei rauher Feldarbeit störanfällig sind.

Die Erfindung befaßt sich mit dem Problem, eine Vorrichtung zum Trennen landwirtschaftlicher Produkte mittels eines Siebbandes zu schaffen, deren zur Bewegung des Siebbandes vorgesehene Antriebsräder mit geringem technischen Aufwand für eine längere Betriebsdauer einsetzbar sind und bei verringerten Materialkosten eine schnellere Reparatur ermöglichen.

Die Erfindung löst diese Aufgabe mit einer Vorrichtung mit den Merkmalen des Anspruchs 1. Hinsichtlich weiterer Ausgestaltungen wird auf die Ansprüche 2 bis 17 verwiesen.

Bei der Vorrichtung zum Trennen landwirtschaftlicher Produkte in erfindungsgemäßer Ausführung ist das mit dem Siebband zusammenwirkende Antriebsrad als eine mehrteilige Baueinheit ausgebildet, die als funktionales Element und einfach auswechselbares Verschleißteil einen das Siebband in der Antriebsphase erfassenden Stützring aufweist.

Dieser Stützring ist auf einem Nabenteil und einem diesem mit axialer Verbindungsrichtung zugeordneten Gegenglied so gehalten, daß bei Auftreten von Verschleiß, insbesondere im Bereich einer an der Umfangskontur des Stützrings vorgesehenen Verzahnungsprofilierung, ein schneller Austausch durch eine einfache Demontage der dreiteiligen Baueinheit möglich ist, das Nabenteil sowie das entsprechende Gegenglied wiederholt verwendbar sind und damit auch die Materialkosten gesenkt werden können.

Die drei Bauteile der Baueinheit sind entsprechend dem Antriebskonzept der Trennvorrichtung und den an deren Antriebsrädern erforderlichen Antriebsmomenten aus weitgehend variablen Material-Verbindungen herstellbar. Denkbar ist dabei, daß der Stützring vollständig aus einem Gummi- bzw. Polyurethan-Werkstoff geformt ist und das Nabenteil bzw. das Gegenglied als jeweilige kostengünstig herstellbare Spritzguß-Teile ausgeführt sind.

In zweckmäßiger Ausführung ist die Rad-Baueinheit so konzipiert, daß durch einfache Steckverbindungen eine schnelle Montage bzw. Demontage der formschlüssig verbundenen Teile möglich ist und damit auch der Installations- und Reparaturaufwand insgesamt gering gehalten werden kann.

Weitere Einzelheiten und vorteilhafte Ausgestaltungen ergeben sich aus der nachfolgenden Beschreibung und der Zeichnung. In der Zeichnung zeigen:
- Fig. 1: eine perspektivische Ausschnittsdarstellung der Vorrichtung zum Trennen landwirtschaftlicher Produkte im Bereich eines Siebbandes mit mehreren Antriebsrädern,
- Fig. 2: eine vergrößerte Einzeldarstellung des Antriebsrades in erfindungsgemäßer Ausführung als mehrteilige Baueinheit,
- Fig. 3: eine Perspektivdarstellung des einen Stützring aufweisenden Antriebsrades im zusammengebauten Zustand,
- Fig. 4: eine Vorderansicht des Antriebsrades gemäß Fig. 3,
- Fig. 5: eine Seitenansicht des Antriebsrades gemäß Fig. 4,
- Fig. 6: eine Draufsicht des Antriebsrades gemäß Fig. 4,
- Fig. 7: eine perspektivische Einzeldarstellung des erfindungsgemäßen Stützringes,
- Fig. 8: eine Vorderansicht des Stützringes gemäß Fig. 7,
- Fig. 9: eine Seitenansicht des Stützringes gemäß Fig. 8,
- Fig. 10: eine Draufsicht des Stützringes gemäß Fig. 8,
- Fig. 11: eine Perspektivdarstellung eines Nabenteils der Baueinheit gemäß Fig. 2,
- Fig. 12: eine Vorderansicht des Nabenteils gemäß Fig. 11,
- Fig. 13: eine Seitenansicht des Nabenteils gemäß Fig. 12,
- Fig. 14: eine Draufsicht des Nabenteils gemäß Fig. 12,
- Fig. 15: eine Perspektivdarstellung eines Gegengliedes der erfindungsgemäßen Baueinheit gemäß Fig. 2,
- Fig. 16: eine Vorderansicht des Gegengliedes gemäß Fig. 15,
- Fig. 17: eine Seitenansicht des Gegengliedes gemäß Fig. 16,
- Fig. 18: eine Draufsicht des Gegengliedes gemäß Fig. 16,
- Fig. 19: eine perspektivische Rückansicht des Gegengliedes gemäß Fig. 15,
- Fig. 20: eine Vorderansicht einer für die Baueinheit gemäß Fig. 2 vorgesehenen Schließplatte, und
- Fig. 21: eine Seitenansicht der Schließplatte gemäß Fig. 20.

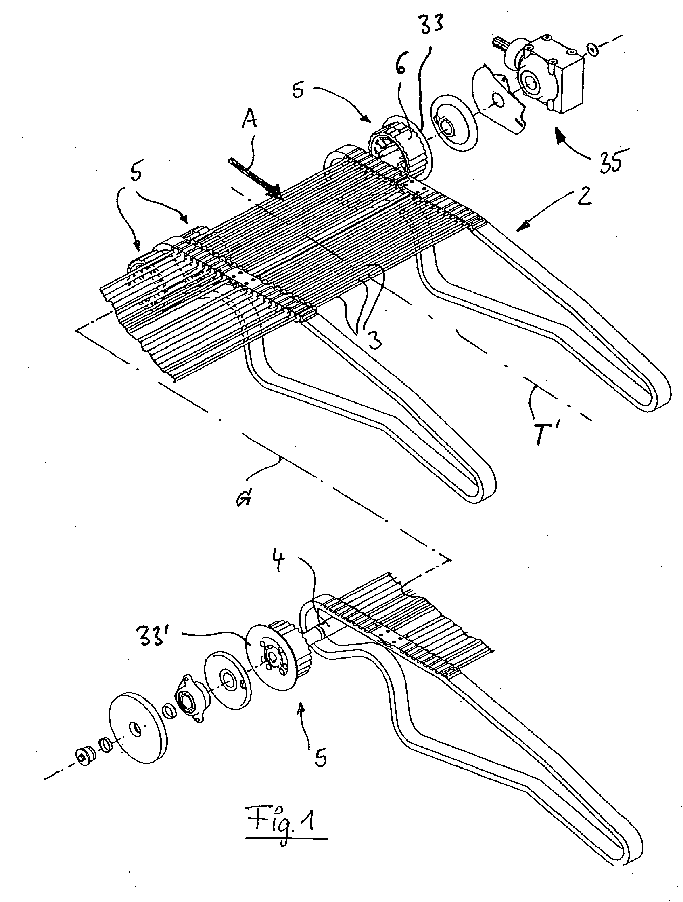

In Fig. 1 ist ausschnittsweise eine insgesamt mit 1 bezeichnete Vorrichtung zum Trennen landwirtschaftlicher Produkte von Beimengungen dargestellt, wobei ein allgemein mit A bezeichnetes Gemisch aus Kartoffeln, Steinen, Kluten u. dgl. auf ein Siebband 2 zugeführt, diese Gemischteile dabei durch Trennspalte bildende Siebelemente 3, beispielsweise in Form der dargestellten Stangenteile, erfaßt werden und damit eine Trennung eingeleitet wird. Das Siebband 2 wird dabei mittels eines mit einer Antriebswelle 4 verbindbaren und im Bereich seiner Umfangskontur die Antriebsverbindung zum Siebband 2 aufweisenden Antriebsrades 5 in Richtung einer Trennebene T' verlagert.

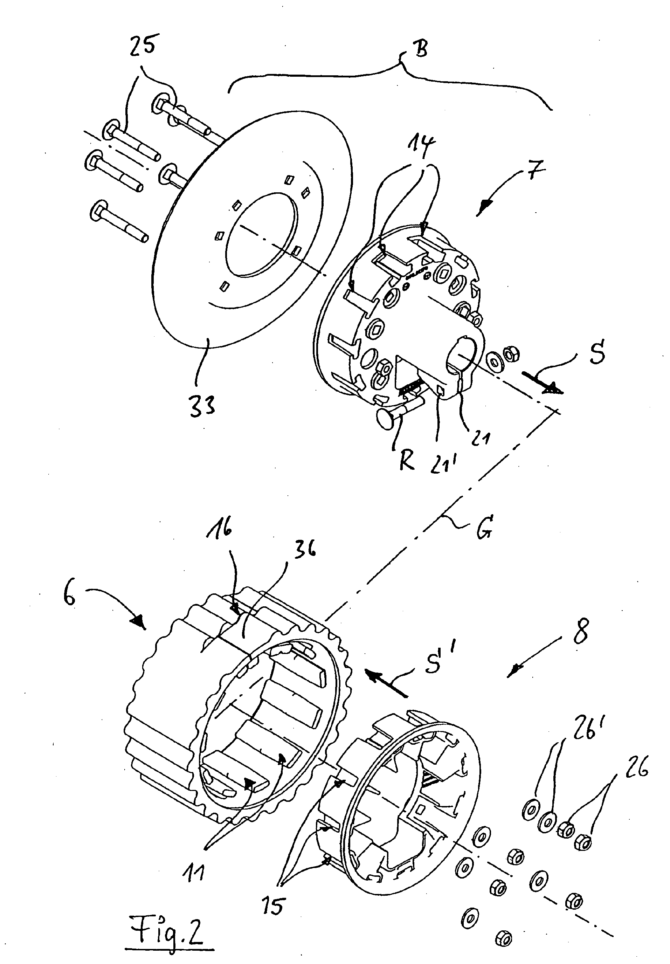

Die Vorrichtung 1 weist mehrere Antriebsräder 5 auf, die in erfindungsgemäßer Ausführung jeweils mit zumindest einem das Siebband 2 bzw. dessen Siebelemente 3 erfassenden und als auswechselbares Verschleißteil ausgebildeten Stützring 6 eine mehrteilige Baueinheit bilden. Die Explosivdarstellung gemäß Fig. 2 verdeutlicht, daß das Antriebsrad 5 als eine im wesentlichen dreiteilige Baueinheit ausgebildet ist, wobei der mit seiner Umfangskontur die Siebelemente 3 erfassende Stützring 6 auf einem mit der Antriebswelle 4 verbindbaren Nabenteil 7 gehalten ist. Bei dieser dreiteiligen Ausführung ist dem Nabenteil 7 ein Gegenglied 8 zugeordnet, wobei diese Bauteile in Richtung der von der Antriebswelle 4 definierten Längsachse G verbindbar sind. Denkbar ist auch, daß bei einer zweiteiligen Ausführung der Baueinheit B nur der Stützring 6 und das Nabenteil 7 als lösbare Teile vorgesehen sind (nicht dargestellt) oder in einer ebenfalls nicht dargestellten Ausführung mehr als die drei Teile verbunden werden.

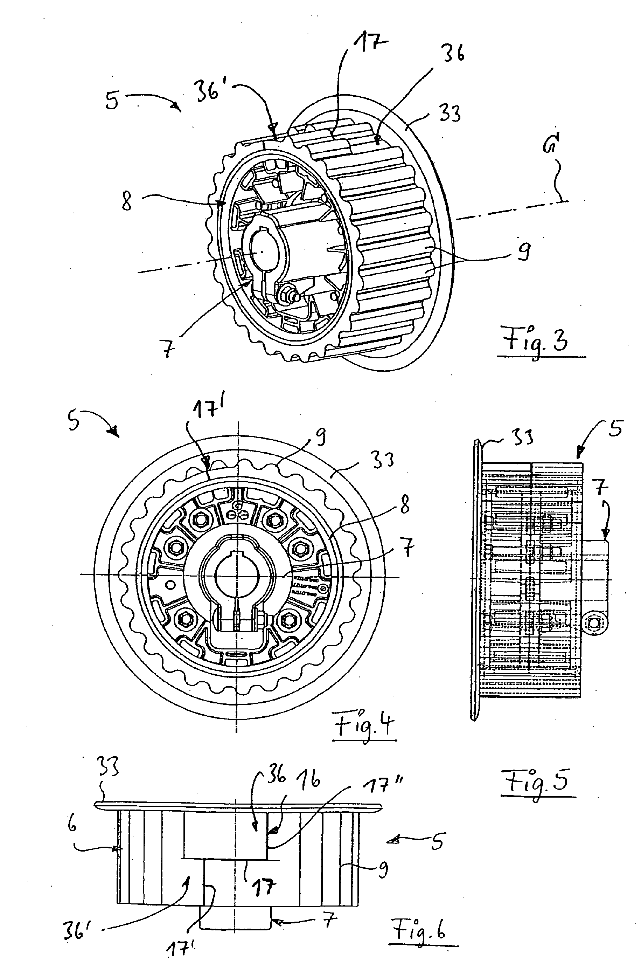

Die vergrößerte Darstellung gemäß Fig. 2 zeigt, daß die Teile 6, 7, 8 der Baueinheit B durch jeweilige im wesentlichen komplementäre Profilierungen aufweisenden Steckverbindungen (Pfeil S, S') verbindbar sind. Nach Erreichen der Verbindungsstellung (Fig. 3) sind das Nabenteil 7 sowie das Gegenglied 8 in der Verbindungsstellung vom Stützring 6 so übergriffen, daß dieser insgesamt nach Art einer radial geschlossenen Hüllkontur über den innenliegenden Teilen verläuft. An seiner Außenkontur weist der Stützring 6 eine an sich bekannte zahnartige Kontur 9 auf.

Die dargestellten Einzelteile der Baueinheit B können aus weitgehend unterschiedlichen Werkstoffen hergestellt werden, wobei Ausführungen aus Metall, Kunststoff o. dgl. denkbar sind. Insbesondere sind jeweilige konstruktive Details der Teile 6, 7, 8 so ausgeführt, daß diese als Spritzguß-Teile in größeren Stückzahlen und mit entsprechend kostengünstiger Fertigung herstellbar sind. In vorteilhafter Ausführung ist der Stützring 6 aus einem Gummi- bzw. Polyurethan-Werkstoff geformt, so daß mit dessen elastischen Eigenschaften für die Aufnahme der Siebelemente 3 optimale Anlagebedingungen erreichbar sind.

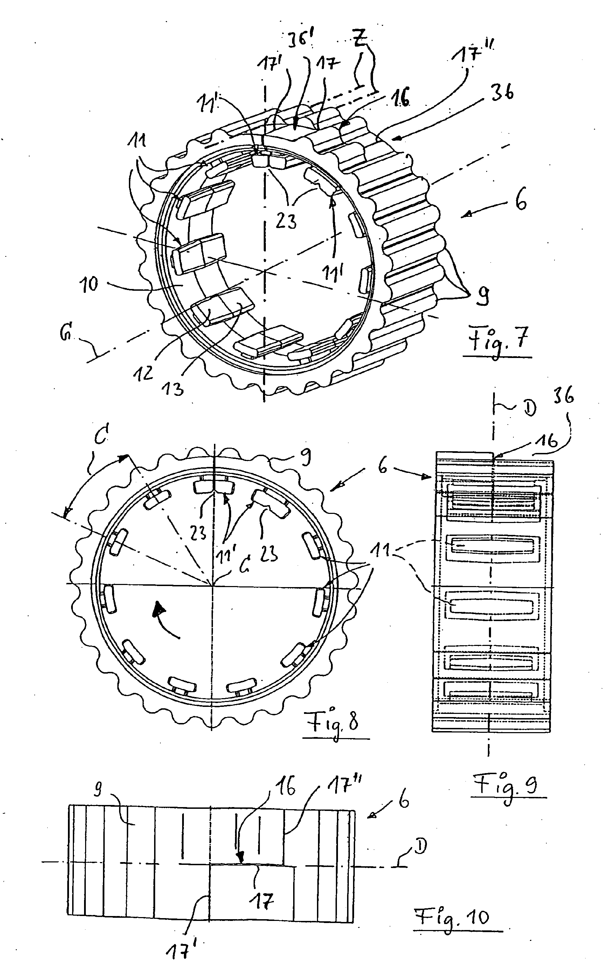

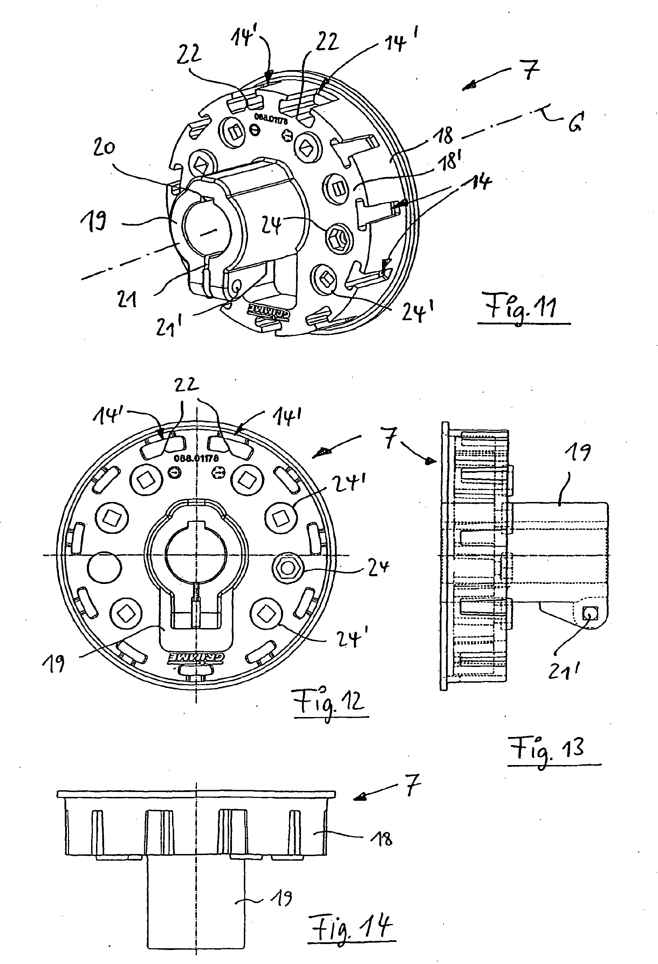

Die Einzeldarstellung des Stützringes 6 gemäß Fig. 7 bis 10 zeigt, daß dieser mit sich in Längsrichtung an dessen Innenwandung 10 erstreckenden, von dieser radial vorstehenden und in Umfangsrichtung einen Abstand C aufweisenden Profilansätzen 11 versehen ist. Diese weisen im Querschnitt eine im wesentlichen T-förmige Kontur auf (Fig. 8). Diese T-Kontur ist zu einer Quermittelebene D des Stützringes 6 hin leicht konisch geformt, so daß zwei gleichartige Profilbereiche 12 und 13 am Profilansatz 11 gebildet sind. In Zusammenschau von Fig. 7 mit Fig. 2 und 11 wird deutlich, daß an den T-förmigen Profilansätzen 11 des Stützringes 6 mit den entgegengesetzten axialen Verbindungsrichtungen gemäß Pfeil S und S' (Fig. 2) einerseits das mit jeweiligen Formausnehmungen 14 versehene Nabenteil 7 und andererseits das mit jeweiligen Steckschlitzen 15 versehene Gegenglied 8 festlegbar sind.

Die Draufsicht gemäß Fig. 10 verdeutlicht, daß der Stützring 6 wandungsseitig einen Z-förmig verlaufenden Trennschlitz 16 aufweist, wobei dessen mittlerer Schlitzbereich 17 in Richtung der Quermittelebene D des Stützringes 6 verläuft und jeweilige Schenkel 17', 17" des Trennschlitzes 16 in Richtung der Achse G' nach außen geführt sind. Mit dieser Ausführung des Trennschlitzes 16 wird dieser an die Eingriffsbedingungen der Siebelemente 3 (Eingriffsebene Z, Fig. 7) so angepaßt, daß eine Beschädigung des Stützrings 6 vermieden wird. Im Bereich der Schenkel 17', 17" sind dabei jeweilige Ausnehmungen 36, 36' vorgesehen, wobei die verzahnungsartige Kontur 9 entfernt ist und damit im unmittelbaren Bereich der Schenkel 17', 17" Überbelastungen vermeidbar sind. Mit diesem Aufbau des Trennschlitzes 16 ist eine besonders einfache Montage bzw. Ersatz des Stützrings 6 auch dann möglich, wenn die Antriebswelle 4 in der Einbaulage (Fig. 1) verbleibt.

In Fig. 11 bis 14 ist das Nabenteil 7 näher veranschaulicht, wobei dieses als ein außenseitig die schlitzförmigen Formausnehmungen 14 für die Steckverbindungen S aufweisender Topfteil 18 geformt ist. Dieser Topfteil 18 ist bodenseitig bei 18' mit einem rohrförmigen Ansatz 19 versehen, mit dem der in den Stützring 6 eingeführte Nabenteil 7 zentral auf der Antriebswelle 4 festlegbar ist (Fig. 1). Dazu ist das Nabenteil 7 im Bereich des Topfbodens 18' bzw. dem Rohransatz 19 mit einer Keilnut 20 und einem Längsschlitz 21 mit Verbindungsöffnung 21' für eine Spannschraube R (Fig. 2) versehen.

Im Bereich seiner beiden in Einbaulage obenliegenden Formschlitze 14' (Fig. 11, Fig. 12) sind jeweilige in den Aufnahmeraum vorstehende Markierungsprofile 22 vorgesehen, die komplementär zu jeweiligen Schlitzen 23 im Bereich der Profilansätze 11' am Stützring 6 geformt sind (Fig. 7). Durch die in Einbaulage (Fig. 3) verbundenen Profile 22 und 23 wird der Trennschlitz 16 im Bereich der Schenkel 17', 17" stabilisiert. Außerdem ist das Nabenteil 7 im Bereich des Topfbodens 18' mit jeweiligen Durchlaßöffnungen 24, 24' versehen, in dem jeweilige Verbindungsschrauben 25 bzw. Muttern 26 und Unterlegscheiben 26' (Fig. 2) festlegbar sind.

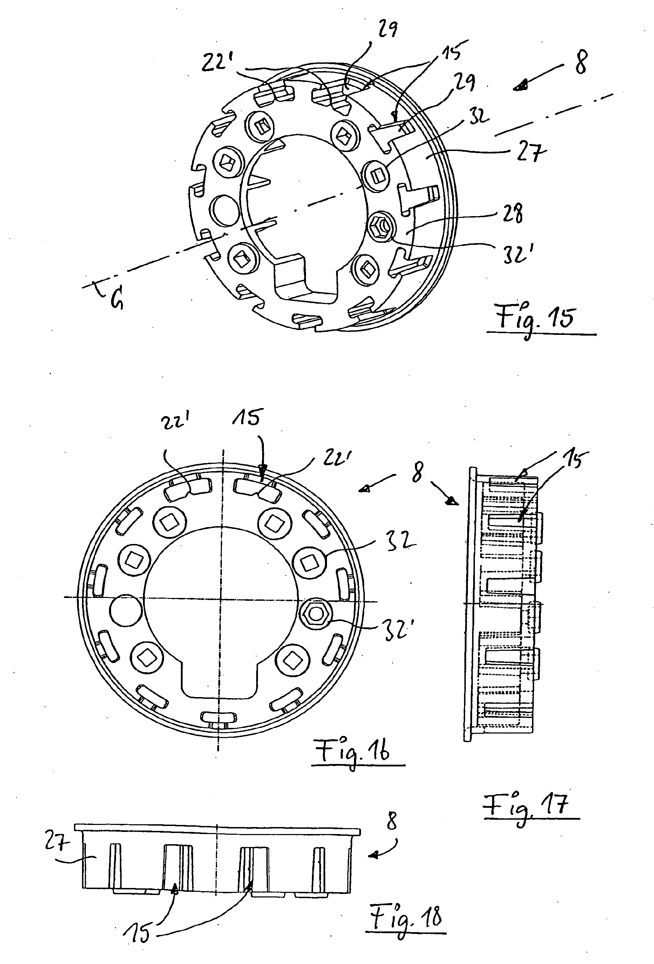

In Fig. 15 bis 19 ist das Gegenglied 8 in Einzeldarstellungen veranschaulicht, wobei dieses nach Art eines Schalenteils 27 mit einem Bodenkranz 28 geformt ist. Mit den jeweiligen Steckschlitzen 15 ist das Gegenglied 8 im wesentlichen komplementär zu den Formausnehmungen 14, 14' des Nabenteils 7 geformt, so daß die Verbindung mit dem Stützring 6 (Verbindungsrichtung S') einfach möglich ist.

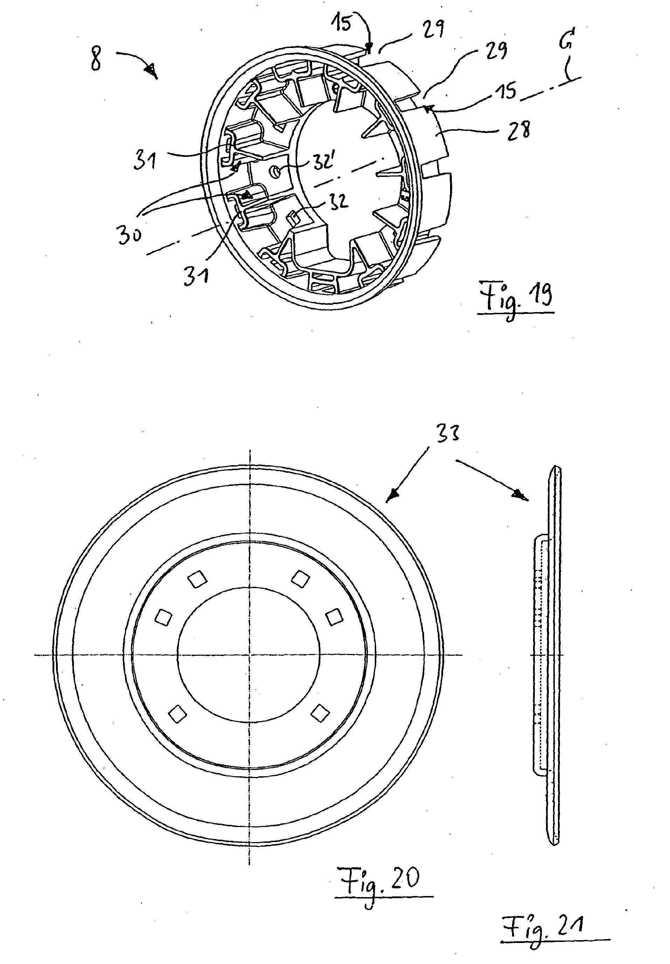

Fig. 19 zeigt, daß der Bodenkranz 28 im Bereich der Steckschlitze 15 auf der zur Wandungsöffnung 29 abgewandten Innenseite mit stabilisierenden T-Ansatzteilen 30 versehen ist, so daß entsprechende radiale Verbindungskräfte aufnehmbar sind. Die T-Ansätze 30 des Stützringes weisen den Aufnahmeraum 29 begrenzende Radialprofilteile 31 auf. Zur Festlegung des Gegengliedes 8 in der Einbaulage wird der Bodenkranz 28 von jeweiligen bereits den Nabenteil 7 erfassenden Verbindungsschrauben 25 im Bereich jeweiliger Verbindungsöffnungen 32, 32' durchgriffen.

Die Zusammenschau von Fig. 1 und 20 bis 21 verdeutlicht, daß die Baueinheit B im Bereich des Nabenteils 7 auf der dem Rohransatz 18 abgewandten Seite mit einer scheibenförmigen Führungsplatte 33, 33' versehen sein kann, so daß zu einem Antrieb 35 hin die Baueinheit B insgesamt abgedeckt ist. Diese Führungsplatten 33, 33' (Fig. 1) bilden jeweilige Sicherungsbauteile, mit denen ein Verlaufen des Siebbandes 2 aus der vorgesehenen Trennrichtung A bzw. T' vermieden wird.

## Patentansprüche

1. Vorrichtung zum Trennen landwirtschaftlicher Produkte von Beimengungen, insbesondere von Kartoffeln aus einem Kluten, Steine u. dgl. enthaltenden Gemisch (A), mit zumindest einem das Gemisch (A) auf Siebelementen (3) aufnehmenden Siebband (2), das mittels zumindest eines mit einer Antriebswelle (4) verbindbaren und im Bereich seiner Umfangskontur die Antriebsverbindung zum Siebband (2) aufweisenden Antriebsrades (5) in Richtung einer Trennebene (T) verlagerbar ist, wobei das Antriebsrad (5) mit einem das Siebband (2) erfassenden und als auswechselbares Verschleißteil ausgebildeten Stützring (6) eine mehrteilige Baueinheit bildet, **dadurch gekennzeichnet, dass** das Antriebsrad (5) als eine im wesentlichen dreiteilige Baueinheit (B) ausgebildet ist, bei der ein mit seiner Umfangskontur die Siebelemente (3) erfassender Stützring (6) auf einem mit der Antriebswelle (4) verbindbaren Nabenteil (7) gehalten und diesem ein Gegenglied (8) zugeordnet ist, wobei diese drei Einzelteile der Baueinheit (B) jeweilige im wesentlichen komplementäre Profilierungen (11, 11'; 14, 14'; 15) als Verbinder aufweisen und diese mit im wesentlichen axialer Verbindungsrichtung (S, S') steckbar sind, derart, dass bei Auftreten von Verschleiß die Teile der Baueinheit (B) lösbar sind.

2. Vorrichtung nach Anspruch 1, **dadurch gekennzeichnet, dass** der Stützring (6) eine das Nabenteil (7) sowie das Gegenglied (8) in deren Verbindungsstellung übergreifende Hüllkontur bildet.

3. Vorrichtung nach Anspruch 1 oder 2, **dadurch gekennzeichnet, dass** die Einzelteile der Baueinheit (B) im wesentlichen aus Kunststoff bestehen.

4. Vorrichtung nach einem der Ansprüche 1 bis 3, **dadurch gekennzeichnet, dass** die Einzelteile der Baueinheit (B) als jeweilige Spritzguß-Teile herstellbar sind.

5. Vorrichtung nach einem der Ansprüche 1 bis 4, **dadurch gekennzeichnet, dass** der Stützring (6) aus einem Gummi- bzw. Polyurethan-Werkstoff geformt ist.

6. Vorrichtung nach einem der Ansprüche 1 bis 5, **dadurch gekennzeichnet, dass** der Stützring (6) sich in Längsrichtung an dessen Innenwandung (10) erstreckende, an dieser mit radialem Abstand (C) angeordnete und im Querschnitt T-förmige Profilansätze (11, 11') aufweist.

7. Vorrichtung nach Anspruch 6, **dadurch gekennzeichnet, dass** an den T-förmigen Profilansätzen (11, 11') mit entgegengesetzten axialen Verbindungsrichtungen (S, S') einerseits das mit jeweiligen Formausnehmungen (14, 14') versehene Nabenteil (7) und andererseits das mit jeweiligen Steckschlitzen (15) versehene Gegenglied (8) festlegbar sind.

8. Vorrichtung nach Anspruch 6 oder 7, **dadurch gekennzeichnet, dass** der Stützring (6) wandungsseitig einen Z-förmig verlaufenden Teilungsschlitz (16) aufweist, wobei dessen mittlerer Schlitzbereich (17) in Richtung der Quermittelebene (D) des Stützrings (6) verläuft und die Schenkel (17', 17") quer zur Ebene (D) nach außen geführt sind.

9. Vorrichtung nach einem der Ansprüche 6 bis 8, **dadurch gekennzeichnet, dass** der Stützring (6) mit einem umfangsseitigen Verzahnungsprofil (9) versehen ist, das im Bereich des Teilungsschlitzes (17) bzw. dessen Schenkel (17', 17") jeweilige Ausnehmungen (36, 36') aufweist.

10. Vorrichtung nach einem der Ansprüche 1 bis 9, **dadurch gekennzeichnet, dass** das Nabenteil (7) als ein außenseitig die schlitzförmigen Formausnehmungen (14, 14') für die Steckverbindungen (S) aufweisender Topfteil (18) geformt ist und dieser bodenseitig (18') einen axial in den Stützring (6) einführbaren sowie die Antriebswelle (4) zentral aufnehmenden Rohransatz (19) aufweist.

11. Vorrichtung nach Anspruch 10, **dadurch gekennzeichnet, dass** das Nabenteil (7) im Bereich zumindest einer der Formausnehmungen (14') mit einem in dessen Aufnahmeraum vorstehenden Markierungsprofil (22) versehen ist.

12. Vorrichtung nach Anspruch 10 oder 11, **dadurch gekennzeichnet, dass** das Nabenteil (7) im Bereich des Topfbodens (18') jeweilige Durchlassöffnungen (24, 24') für in axialer Richtung zum Gegenglied (8) hin einschiebbare Verbindungsschrauben (25) aufweist.

13. Vorrichtung nach einem der Ansprüche 10 bis 12, **dadurch gekennzeichnet, dass** der Rohransatz (19) des Nabenteils (7) zur Festlegung auf der Antriebswelle (4) eine Keilnut (20) und einen Längsschlitz (21) aufweist.

14. Vorrichtung nach einem der Ansprüche 1 bis 13, **dadurch gekennzeichnet, dass** das Gegenglied (8) im Verbindungsbereich zum Stützring (6) bzw. Nabenteil (7) als ein komplementäres Schalenteil (27) mit Bodenkranz (28) geformt ist, dessen an dem Bodenkranz (28) befindliche und einerseits eine Öffnung (29) in der Wandung bildende Steckschlitze (15) andererseits mit einem stabilisierenden radialen T-Ansatz (30) versehen sind.

15. Vorrichtung nach Anspruch 14, **dadurch gekennzeichnet, dass** das Schalenteil (27) im radialen Wandungsbereich jeweilige Steckschlitze (15) aufweist und diese einen den Aufnahmeraum für die T-Ansätze (30) des Stützrings begrenzenden Radialprofil (31) zugeordnet sind.

16. Vorrichtung nach Anspruch 14 oder 15, **dadurch gekennzeichnet, dass** der Bodenkranz (28) jeweilige die bereits den Nabenteil (27) erfassenden Verbindungsschrauben (25) aufnehmende Verbindungsöffnungen (32, 32') aufweist.

17. Vorrichtung nach einem der Ansprüche 1 bis 16, **dadurch gekennzeichnet, dass** die Baueinheit (B) im Bereich des Nabenteils (7) auf der dem Rohransatz (19) abgewandten Seite mit einer scheibenförmigen Führungsplatte (33) versehen ist.

## Claims

1. Arrangement for separating agricultural products from other materials, and in particular potatoes from a mixture (A) containing clods, stones and the like, having at least one screening belt (2) which receives the mixture (A) on screening members (3) and which is displaceable in the direction defined by a plane of separation (T) by means of at least one driving wheel (5) which can be connected to a drive shaft (4) and which has the driving connection to the screening belt (2) in the region of its circumferential contour, the driving wheel (5), which has a supporting ring (6) taking a grip on the screening belt (2) and which is in the form of a replaceable wearing part, forming a multi-part unit structure, **characterised in that** the driving wheel (5) takes the form of a unit structure (B) substantially in three parts in which a supporting ring (6) which takes a grip on the screening members (3) by its circumferential contour is held on a hub member (7) able to be connected to the drive shaft (4), and the hub member (7) has associated with it a mating member (8), these three individual parts of the unit structure (B) having respective substantially complementary profilings (11, 11'; 14, 14'; 15) as connecting means and these latter being able to be plugged together in substantially axial directions of connection (S, S') in such a way that if wear occurs the parts of the unit structure (B) can be detached.

2. Arrangement according to claim 1, **characterised in that** the supporting ring (6) forms an envelope which fits over the hub member (7) and the mating member (8) when they are in their connected position.

3. Arrangement according to claim 1 or 2, **characterised in that** the individual parts of the unit structure (B) are composed in essence of plastics material.

4. Arrangement according to one of claims 1 to 3, **characterised in that** the individual parts of the unit structure (B) can be produced as respective injection mouldings.

5. Arrangement according to one of claims 1 to 4, **characterised in that** the supporting ring (6) is formed or moulded from a rubber or polyurethane material.

6. Arrangement according to one of claims 1 to 5, **characterised in that** the supporting ring (6) has profiled projections (11, 11') which extend along the interior wall (10) of the supporting ring (6) in the longitudinal direction, which are arranged thereon at a circumferential spacing (C), and which are T-shaped in cross-section.

7. Arrangement according to claim 6, **characterised in that**, in opposite axial directions of connection (S, S'), the hub member (7), which is provided with respective shaped recesses (14, 14'), can be secured in position on the T-shaped profiled projections (11, 11') on the one hand, and the mating member (8), which is provided with respective slots (15) for insertion, can be secured in position thereon on the other hand.

8. Arrangement according to claim 6 or 7, **characterised in that** the supporting ring (6) has, in its wall, a dividing slit (16) which extends in a Z-shape, with the central region (17) of the dividing slit (16) extending in the direction defined by the transverse centre plane (D) of the supporting ring (6) and the side-arms (17', 17") running outwards at right angles to the plane (D).

9. Arrangement according to one of claims 6 to 8, **characterised in that** the supporting ring (6) is provided at the circumference with a toothed profile (9) which has respective recesses (36, 36') in the region of the dividing slit (17) or rather of the side-arms (17', 17") thereof.

10. Arrangement according to one of claims 1 to 9, **characterised in that** the hub member (7) is formed or moulded as a cup-like member (18) having on the outside the shaped recesses (14, 14') in slot form for the plug-in connections (S), and the said cup-like member (18) has, in its floor (18'), a tubular projection (19) which can be inserted axially in the supporting ring (6) and which receives the drive shaft (4) centrally.

11. Arrangement according to claim 10, **characterised in that** the hub member (7) is provided in the region of at least one of the shaped recesses (14') with a marking profile (22) which projects into the receiving space of the latter.

12. Arrangement according to claim 10 or 11, **characterised in that** the hub member (7) has, in the region of the floor (18') of the cup, respective through-openings (24, 24') for connecting screws or bolts (25) which can be inserted in the axial direction towards the mating member (8).

13. Arrangement according to one of claims 10 to 12, **characterised in that** the tubular projection (19) from the hub member (7) has a keyway (20) and a longitudinal slot (21) to enable it to be secured in position on the drive shaft (4).

14. Arrangement according to one of claims 1 to 13, **characterised in that**, in the regions for connection to the supporting ring (6) and the hub member (7) the mating member (8) is formed or moulded to form a complementary bowl-like member (27), having a bottom ring (28), whose slots (15) for insertion, which on the one hand form openings (29) in the wall, are on the other hand provided with a strengthening T-shaped radial projection (30).

15. Arrangement according to claim 14, **characterised in that** the bowl-like part (27) has respective slots for insertion (15) in the circumferential region of its wall and these are associated with a circumferential profile (31) which defines the receiving space for the T-shaped projections (30) on the supporting ring.

16. Arrangement according to claim 14 or 15, **characterised in that** the bottom ring (28) has respective connecting openings (32, 32') which hold the connecting bolts or screws (25) which are already gripping the hub member (27).

17. Arrangement according to one of claims 1 to 16, **characterised in that**, on the side remote from the tubular projection (19) the unit structure (B) is provided, in the region of the hub member (7), with a mounting plate (33) in disc form.

## Revendications

1. Dispositif destiné à séparer des produits agricoles d'additifs, en particulier de pommes de terre composées d'un mélange (A) contenant des mottes, des cailloux et similaires, comprenant au moins un tamis à bande (2) recevant le mélange (A) sur des éléments de tamis (3) et pouvant être déplacé au moyen d'au moins une roue d'entraînement (5) pouvant être reliée à un arbre d'entraînement (4) et comprenant dans la zone de son contour périphérique la liaison d'entraînement au tamis à bande (2) en direction d'un plan de séparation (T), la roue d'entraînement (5) formant avec une bague d'appui (6) détectant le tamis à bande (2) et conçue comme une partie d'usure amovible une unité modulaire en plusieurs parties, **caractérisé en ce que** la roue d'entraînement (5) est conçue comme une unité modulaire (B) sensiblement en trois parties pour laquelle une bague d'appui (6) détectant avec son contour périphérique les éléments de tamis (3) est maintenue sur une partie de moyeu (7) pouvant être reliée à l'arbre d'entraînement (4) et à laquelle est associé un contre-organe (8), ces trois parties individuelles de l'unité modulaire (B) comprenant des profilages (11, 11' ; 14, 14' ; 15) respectifs sensiblement complémentaires comme connecteurs et ces derniers pouvant être emboîtés dans une direction de raccordement (S, S') sensiblement axiale, de telle sorte que lorsqu'une usure se produit, les parties de l'unité modulaire (B) puissent être détachées.

2. Dispositif selon la revendication 1, **caractérisé en ce que** la bague d'appui (6) forme un contour enveloppant recouvrant la partie de moyeu (7) ainsi que le contre-organe (8) dans leur position de raccordement.

3. Dispositif selon la revendication 1 ou 2, **caractérisé en ce que** les parties individuelles de l'unité modulaire (B) sont sensiblement constituées de matière plastique.

4. Dispositif selon l'une quelconque des revendications 1 à 3, **caractérisé en ce que** les parties individuelles de l'unité modulaire (B) peuvent être fabriquées comme des pièces respectives moulées par injection.

5. Dispositif selon l'une quelconque des revendications 1 à 4, **caractérisé en ce que** la bague d'appui (6) est composée d'un matériau en caoutchouc ou polyuréthane.

6. Dispositif selon l'une quelconque des revendications 1 à 5, **caractérisé en ce que** la bague d'appui (6) comprend des appendices profilés (11, 11') s'étendant dans la direction longitudinale sur sa paroi intérieure (10), disposés sur ladite paroi avec un écart radial (C) et en forme de T en section transversale.

7. Dispositif selon la revendication 6, **caractérisé en ce que** la partie de moyeu (7) pourvue d'évidements façonnés (14, 14') respectifs d'une part et d'autre part le contre-organe (8) pourvu de fentes d'emboîtement (15) respectives peuvent être fixés sur les appendices profilés (11, 11') en forme de T comprenant des directions de raccordement (S, S') axiales opposées.

8. Dispositif selon la revendication 6 ou 7, **caractérisé en ce que** la bague d'appui (6) comprend côté paroi une fente de séparation (16) s'étendant en forme de Z, leur zone de fente moyenne (17) s'étendant en direction du plan moyen transversal (D) de la bague d'appui (6) et les branches (17, 17") étant guidées transversalement au plan (D) vers l'extérieur.

9. Dispositif selon l'une quelconque des revendications 6 à 8, **caractérisé en ce que** la bague d'appui (6) est pourvue d'un profilé de denture (9) côté périphérie comprenant dans la zone de la fente de séparation (17) ou de ses branches (17, 17') des évidements (36, 36') respectifs.

10. Dispositif selon l'une quelconque des revendications 1 à 9, **caractérisé en ce que** la partie de moyeu (7) est formée comme une partie de pot (18) comprenant côté extérieur les évidements façonnés (14, 14') en forme de fente pour les assemblages par emboîtement (S) et ladite partie comprend côté fond (18') un appendice tubulaire (19) pouvant être introduit axialement dans la bague d'appui (6) et recevant au centre l'arbre d'entraînement (4).

11. Dispositif selon la revendication 10, **caractérisé en ce que** la partie de moyeu (7) est pourvue dans la zone d'au moins un des évidements façonnés (14') d'un profilé de marquage (22) faisant saillie dans son espace de logement.

12. Dispositif selon la revendication 10 ou 11, **caractérisé en ce que** la partie de moyeu (7) comprend dans la zone du fond du pot (18') des ouvertures de passage (24, 24') respectives pour des vis de raccordement (25) pouvant être introduites dans la direction axiale du côté du contre-organe (8).

13. Dispositif selon l'une quelconque des revendications 10 à 12, **caractérisé en ce que** l'appendice tubulaire (19) de la partie de moyeu (7) comprend une rainure de clavetage (20) et une fente longitudinale (21) pour la fixation sur l'arbre d'entraînement (4).

14. Dispositif selon l'une quelconque des revendications 1 à 13, **caractérisé en ce que** le contre-organe (8) dans la zone de raccordement à la bague d'appui (6) ou à la partie de moyeu (7) est formé comme une partie de coque complémentaire (27) comprenant une couronne de fond (28) dont les fentes d'emboîtement (15) situées sur la couronne de fond (28) et formant d'une part une ouverture (29) dans la paroi sont pourvues d'autre part d'un appendice en T radial (30) à stabilisation.

15. Dispositif selon la revendication 14, **caractérisé en ce que** la partie de coque (27) comprend dans la zone de paroi radiale des fentes d'emboîtement (15) respectives et auxquelles est associé un profilé radial (31) limitant l'espace de réception pour les appendices en T (30) de la bague d'appui.

16. Dispositif selon la revendication 14 ou 15, **caractérisé en ce que** la couronne de fond (28) comprend des ouvertures de raccordement (32, 32') respectives recevant les vis de raccordement (25) détectant déjà la partie de moyeu (27).

17. Dispositif selon l'une quelconque des revendications 1 à 16, **caractérisé en ce que** l'unité modulaire (B) est pourvue dans la zone de la partie de moyeu (7) sur la face opposée à l'appendice tubulaire (19) d'une plaque de guidage (33) en forme de disque.
